# EUROPEAN PATENT SPECIFICATION

(11) **EP 1 675 128 B1**
(45) Date of publication and mention of the grant of the patent: **23.01.2008**
(21) Application number: 05111737.2
(22) Date of filing: 06.12.2005
(51) Int. Cl.: G21K 4/00, C09K 11/85

(54) **Storage phosphor providing improved speed**
Speicherleuchtstoff mit verbesserter Geschwindigkeit
Phosphore de stockage avec reaction plus rapide

(30) Priority: 23.12.2004 EP 04106922
(43) Date of publication of application: 28.06.2006
(73) Proprietor: Agfa HealthCare NV, 2640 Mortsel (BE)
(72) Inventor: Schierning, Gaby, 91058 Erlangen (DE); Batenschuk, Miroslav, 91058 Erlangen (DE); Osvet, Andres, 91058 Erlangen (DE); Winnacker, Albrecht, 91058 Erlangen (DE); Struye, Luc c/o Agfa-Gevaert, 2640 Mortsel (BE); Lamotte, Johan, c/o Agfa Gevaert, 2640 Mortsel (BE); Tahon, Jean-Pierre, Agfa-Gevaert, 2640 Mortsel (BE); Leblans, Paul c/o Agfa-Gevaert, 2640 Mortsel (BE)
(74) Representative: Theunis, Patrick

(56) References cited:
- US-A1- 2003 186 023
- US-A1- 2003 189 179
- US-A1- 2004 056 209
- HACKENSCHMIED P ET AL: "Precipitation-induced photostimulated luminescence in CsBr:Eu2+" JOURNAL OF APPLIED PHYSICS, AMERICAN INSTITUTE OF PHYSICS. NEW YORK, US, vol. 93, no. 9, 1 May 2003 (2003-05-01), pages 5109-5112, XP012059505 ISSN: 0021-8979
- P. HACKENSCHMIED ET.AL.: "Storage performance of X-ray irridiated doped CsBr" NUCLEAR INSTRUMENTS AND METHODS IN PHYSICS RESEARCH B, vol. 191, 2002, pages 163-167, XP002369028

## Description

### FIELD OF THE INVENTION

The present invention relates to stimulable or storage phospors and to panels containing such phosphors. More specifically the present invention is related to phosphors showing improved speed, without impairing sharpness.

### BACKGROUND OF THE INVENTION

It is well known to use photoluminescent storage phosphor screens for various purposes, including computed radiography. Such phosphor screens may be created by applying a phosphor layer onto a substrate which may be formed of quite a lot of suitable materials, including metals, glass, polymers (like polyester, polycarbonate, carbon reinforced resin materials), ceramic composites and miscellaneous materials as a-C (amorphous carbon), without however being limited thereto. The phosphor screens include coated or deposited materials capable of trapping electrons and holes when exposed to ionizing radiation energy. Between support and phosphor layer, a subbing or intermediate substrate may be present. Such a substrate may function as a layer improving adhesion of the phosphor layer onto the substrate, or as a layer, improving protection against e.g. dirt or moisture, improving reflection of stimulated light in favour of sensitivity or improving absorption of stimulation light in favour of sharpness.

Such phosphor screens, when exposed to radiation quanta, are capable of storing an image, or a spatially varying energy pattern, by trapped electrons. The screens undergo a reversible change of the electronic state of the screen when they are exposed to the radiation quanta. The state is reversed by mildly exposing the screen to infrared or red photons, which is accompanied by emission of more photons within the wavelength range of the visible spectrum. So the phosphor screen provides ability to absorb a radiation pattern, to store the information as trapped electrons, and is later read optically by converting the electronically stored radiation pattern to a pattern visible for a light detector.

Most phosphor screens include a phosphor composition which uses as a base material barium fluorohalide type storage phosphors, such as e.g. BaFBr:Eu or the more recently selected cesium halide type phosphor such as the preferred CsBr:Eu phosphor, providing ability to be coated as a needle-shaped binderless layer by vapour deposition techniques as has been taught e.g. in WO 01/03156. Vapour deposition of a phosphor onto a dedicate substrate as described therein proceeds by a method selected from the group consisting of physical vapour deposition, chemical vapor deposition or an atomisation technique.

Photo-induced photostimulated luminescence in CsBr:Eu²⁺ powders having relatively high amounts of Eu-dopant, i.e. in the range from 0.01 up to 5 mole%, has been described in Journal of Applied Physics, Vol. 93 (9), 2003, p. 5109-5112. As has been taught therein one can forcast a significant mismatch between perovskite-like phases and the CsBr host matrix, which is one reason, in the opinion of the authors, for the enhancement of the photostimulated intensity after formation of second phases in the Cs-Eu-Br-system due to better localisation of charge carrier in the vicinity of the phas boundary, i.e. in the direct neighbourhood of Eu²⁺ in the Eu-containing phases, wherein non-nanosized CsEuBr₃ and Cs₄EuBr₆ phases have dimensions of some tenths of a micrometer up to several micrometers.

In Nuclear Instruments and Methods in Physics Research B, Vol. 191, 2002, p.163-167, the storage performance of CsBr:Eu²⁺ is described, with a concentration of Eu²⁺ up to 5.0 mol%. The compounds CsEuBr₃ and Cs₄EuBr₆ are present as second phase, without reference to dimensions thereof.

When doped with rare earth ions, generation of new energy levels within the crystalline lattice appears. Ions consisting of a nucleus of protons and neutrons are surrounded by outer electrons that can only occupy certain energy levels which can each accommodate a fixed number of electrons. Electrons can undergo transition between levels if the levels are only partially filled. Transition of an electron from a lower energy level to a higher energy level requires an absorption of energy by the electron, while transition of an electron from a higher energy level to a lower energy level gives rise to an emission of energy by the electron. In the particular case where an electron is stored in a higher energy level, without spontaneously or promptly falling back to a lower energy level, stimulation by an energy source is required in order to provoke stimulated emission of stimulated radiation by e.g. light exposure, heat or other appropriate energy sources. With respect to the rare earth ions, the 4f level is only partially filled, but is surrounded by electrons in higher energy levels. As such, the electrons may undergo transition: e.g. 4f electrons may move to the higher 5d level. Energy difference between 4f and 5d levels corresponds to visible light energy such that 4f electrons may be excited to the 5d level by absorption of visible light. Subsequently, 5d electrons can fall back to the 4f level, accompanied by the emission of light.

When rare earth ions are introduced within the crystalline lattice, energy level configurations change due to interaction between the electron energy levels of the ions with the electron energy levels of the phosphor crystal. Electrons of the rare earth ion energy levels may further interact with each other. A well known example of such interactions occurs when the crystal is exposed to ionising radiation, as electrons from the valence band are excited to the conduction band. Removal of the electron thereby leaves behind a net positive charge or "hole" and "electron and hole" are referred to as an "electron-hole pair". Electron-hole pairs are mobile within the crystal lattice and, due to potential barriers, the pair generally remains bound as it travels through the lattice, wherein such a bound pair is known as an "exciton".

In phosphors wherein excitons are long-lived, they may migrate through the lattice for some time before recombining and neutralizing each other. Such excitons preferentially recombine at distortions such as a foreign ion. Energy generated from the recombined pair becomes transferred to the "lattice foreign ion" or activator which results in excitation of the ground level 4f electron to a 5d level of said ion, in the case the foreign ion is a lanthanide ion. Once in the 5d level, it will fall back to the 4f level and give rise to emission of a photon. In storage phosphors the electrons and holes of the created excitons may be separated and be stored separately in electron traps and hole traps respectively By creating a population of trapped electrons and holes in the phosphor screen, a latent image is created. Such a trapping process is reversed by stimulating electrons trapped at trapping sites with external energy as e.g. energy to move a trapped electron to an excited state which is 1-2 eV higher in energy than the ground state of the trapping centre. Optical stimulation, thus, is equivalent to exposure to 600 to 1,200 nm wavelength photons. Optical stimulation wavelength ranges for such a transition thus show a peak efficiency at 1-2 eV, being an energy in the red to near-infrared (NIR) region.

Once in the excited state, the electron can tunnel or migrate to a trapped hole, recombine with the hole and transfer the excess energy to the activator ion in the vicinity. The activator ion will be excited and will emit a photon upon de-excitation. The luminescence thus created is referred to as "photostimulated luminescence" or "PSL". So the intensity of the PSL is directly proportional to the number of trapped electrons which is proportional to the amount of radiation energy absorbed by the phosphor screen.

If the excitons do not get split up, or in the absence of trapping centres, excitons are likely to recombine on an activator ion, thereby generating visible light photons. This process is known as prompt emission luminescence. Trapping centres can be induced by the use of co-dopants. Co-dopants are lattice foreign ions which can be introduced into the lattice by different procedures : during the evaporation process or during annealing. These co-dopants don't emit light after stimulation with red or IR light.

The efficiency of electron trapping thus depends upon the efficiency of the various trap creation process steps, including exciton generation, exciton split-up, and electron and hole trapping. The efficiency of exciton generation, and therefore, the number of created excitons, depends on the specific X-ray absorption of the storage phosphor. The specific X-ray absorption depends on the chemical composition and cannot, therefore, be improved for a certain storage phosphor type. Consequently, increasing the electron trapping efficiency of a storage phosphor can be accomplished by making exciton split-up more efficient and/or by making electron and hole trapping more efficient.

After phosphor screen energy absorption, the latent image, must be converted to a digital image. The phosphor screen is scanned therefore with a laser beam so that only a small volume of the phosphor layer is photostimulated at any given time. Remaining areas are left undisturbed.

A scanning mirror is digitally controlled to the precise laser beam position on the screen so that the PSL intensity from the small phosphor area can be measured with a light sensor, for example, a photomultiplier tube which converts the light into an electrical current, converted to voltage and digitized. The digital voltage value is stored in a computer memory as a function of the x-y position coordinates on the phosphor screen as the process of reading each small portion is repeated across the entire phosphor screen.

It is clear that there remains a need in the art for improved storage phosphors which can can store a large amount of radiation energy and which give rise to highly efficient PSL upon read-out of the storage phosphor plate.

### OBJECTS AND SUMMARY OF THE INVENTION

It is a first object of the present invention to provide photostimulable or storage phosphor showing improved speed and improved response to stimulation light.

Further objects will become apparent from the description hereinafter.

The above-mentioned advantageous effects have been realized by providing storage or stimulable phosphors, the specific features of which have been set out in claim 1. Specific features for preferred embodiments of the invention are set out in the dependent claims.

The inclusion of precipitates or particles, in a needle-shaped storage or stimulable phosphor comprising a host or matrix compound and a dopant or activator compound or element in an amount of less than 0.01 mole% versus said host or matrix compound, is so that inclusions or precipitates, are present as ferroelectric particles having a size in the range from 10⁻³ µm up to 10 µm in said matrix compound, and more preferably as particles having a size in the range from 10 nm to 1,000 nm, which is assumed to result in a more efficient exciton split-up.

Preferably the precipitates are ferro-electric, because the electric field of the ferro-electric precipitates creates very favourable conditions for separation of electrons and holes of the excitons.

Further advantages and embodiments of the present invention will become apparent from the following description and drawings.

### BRIEF DESCRIPTION OF THE DRAWINGS

Fig.1 shows TEM-images of the precipitates, without additional temperature treatment (column A) ; annealed at 180°C during 4 hours in air (column B) and annealed during 4 hours at 400°C in air (column C) - 1, 2 and 3: samples prepared by ultramicrotomy; 4 (where present): samples prepared by polishing and ion-miling.
Fig.2 shows the accumulation of precipitates, seen in an imaging plate which was not temperature treated. In the left photograph, holes - presumably disruptions of precipitates - are shown in an ultramicrotomy cut; whereas in the right photograph precipitates - white in SEM contrast - are shown on a polished sample.
Fig. 3 shows the homogeneous distribution of precipitates, white in a scanning electron microscope (SEM) contrast, after tough temperature treatment, not suitable for application upon X-ray storage phosphors (annealed at 405°C in air), with average distances between precipitates of about 2 µm.
Fig. 4 shows inclusions, made visible in "dark field" mode (4A) and in "bright field" mode (4B).
Fig.5A shows a hysteresis loop of a CsBr:Eu -imaging plate. Fig.5B shows the same measurement as in Fig.4A, but performed on a polyester foil (PET).
Fig.6 shows an electric circuit for measuring a ferroelectric hysteresis loop, to be represented on an oscilloscope screen.
Fig.7 shows dimensions of an imaging plate of CsBr:Eu as a capacitor and of the copper plates to be arranged in a furnace in order to monitor the capacitance during heating of the furniture in an inert atmosphere (figures expressed in mm, tolerances further given - no upper tolerance; at most 0.2 mm lower acceptable).
Fig. 8 shows the arrangement of imaging plate (test sample 5), between two copper plates (3), copper thread connections (2 and 4), arranged in a plastic holder (1) at both sides (to provoke good contact of sample and copper plates by pressure).

### DETAILED DESCRIPTION OF THE INVENTION

According to the present invention a storage phosphor sheet, plate or panel, comprises a needle-shaped storage or photostimulable phosphor, said needle-shaped phosphor comprising a host or matrix compound and a dopant or activator compound or element in an amount of less than 0.01 mole% versus said host or matrix compound, and wherein said needle-shaped phosphor further comprises, as inclusions or precipitates, particles having a size in the range from 10⁻³ µm up to 10 µm, characterised in that said particles are present as ferroelectric particles, thus providing ferroelectrical properties to said plate or panel. In one embodiment of the present invention in said storage phosphor plate or panel said particles, present as inclusions or precipitates, have a size in the range from 10 nm to 1 µm.

According to the present invention in said storage or stimulable phosphor panel, at least said dopant or activator compound or element is present as a precipitate, particle or other inclusion in said matrix compound.

In one embodiment thereof, in the panel according to the present invention, said precipitate is CsₓEu_{y}Br_{x+αy}. In a most preferred embodiment according to the present invention, said precipitate is CsₓEu_{y}Hr_{x+αy} wherein 2 ≤ a < 3. Ratios of divalent and trivalent europium therein are in the range between 10⁻¹:1 and 10⁶:1; more preferably between 10³:1 and 10⁶:1.

Ferroelectric effects are interpreted as being related with spontaneous polarization of built stable domains, functioning as electric dipoles. Ferroelectric dipoles incorporated in X-ray storage phosphors panels according to the present invention thus provide ability to enhance sensitivity, by induction of an electrical field upon the surrounding elementary phosphor crystal cells of the phosphor, thereby suppressing spontaneous exciton recombination, at least in close vicinity of the ferroelectric particles, precipitates or another inclusion. It has been found now that particles should be crystalline in order to provoke ferroelectic properties. So it has clearly been established that an amorphous material can never build ferro-electrical regions.

Experimental evidence for the existence of inclusions in particle form, such as precipitates, in CsBr:Eu needle imaging plates, obtained by vapour deposition onto a suitable substrate have been found by TEM-analysis of samples of a storage phosphor plate, prepared for analysis in two different ways. Said vapour deposition as a particular technique advantageously proceeds by methods including thermal vapor deposition, electron beam evaporation, magnetron sputtering, radio frequency sputtering and pulsed laser deposition or atomisation techniques such as spray drying and thermal spraying, without being limited hereto. In a first experiment TEM foils were cut by ultramicrotomy (dry cutting wherein foil thicknesses in the range from 50 nm to 80 nm were obtained), whereas in a second preparation a polishing technique was applied and an Argon-ion-milling technique (milling performed at liquid nitrogen temperature).

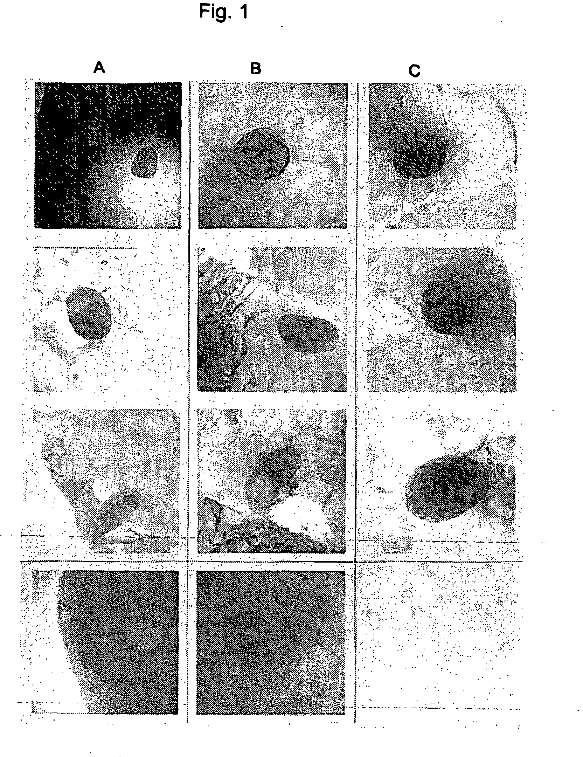

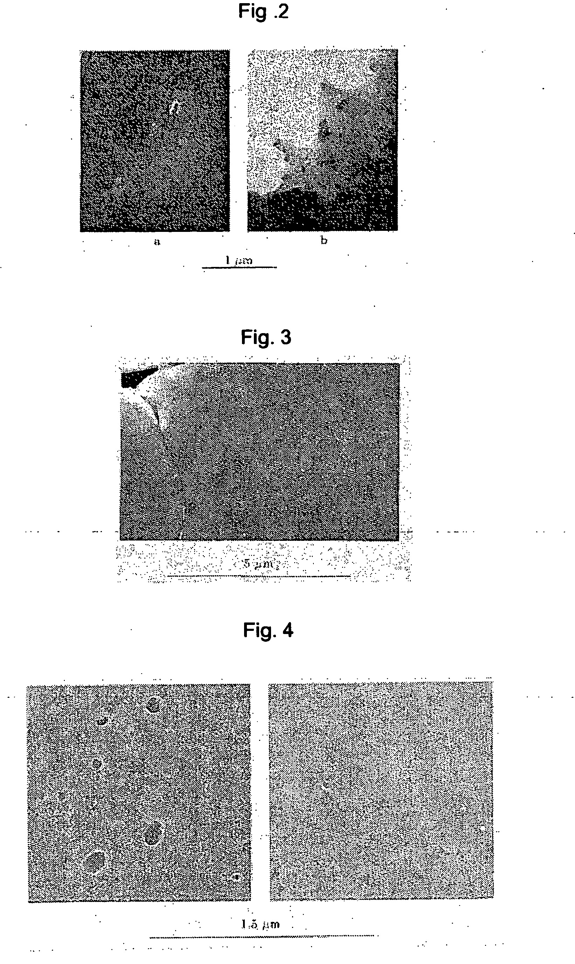

Results thereof have been shown in Fig. 1 for phosphor plates
- without an annealing step (no additional heat treatment - see photographs in the left column);
- with an annealing step (at 180°C, during a time of 4 hours, in air)
- with an extended annealing step (at 400°C, during a time of 4 hours, in air).

In the stimulable phosphor panel according to the present invention said inclusions or precipitates are present in said needle-shaped storage phosphor, wherein in said storage phosphor a total amount of activator compound present ranges from 1 p.p.m. to 200 p.p.m..

In the stimulable phosphor panel according to the present invention an average interspace between inclusions or precipitates in said phosphor is in the range from 50 nm to 15 µm.

In the stimulable phosphor according to the present invention said precipitates or inclusions advantageously are ferroelectric particle compounds.

In a further embodiment of the stimulable phosphor panel according to the present invention said inclusions in form of a particles, such as a precipitate, have an average particle size, expressed as average equivalent volume diameter, in the range from 10 nm to 1000 nm. More preferably said average particle size is in the same range but up to 750 nm and even more preferably said average particle size is in a range up to 100 nm. Standard deviations upon said average particle sizes, expressed as percentages thereof, are in the range from 10 to 40 %, more preferably from 10 to 30 % and most preferably from 10 to 20 %.

In one embodiment according to the present invention the inclusions or precipitates in said stimulable phosphor plate or panel, are compounds or a mixture of compounds having as a general formula (1)

M¹M²X₃ (1)

wherein M¹ represents one of Li, Na, K, Rb and Cs as an alkali metal;
wherein M² represents one of Mg, Ca, Sr and Ba as an earth alkaline metal; Eu or Sm as a lanthanide; Hg or Pb as a transition metal; wherein X stands for one of F, Cl, Br or I as a halide.

Mixtures of those compounds or compositions are thus also included.

According to the present invention, in a more particular form those inclusions in the phosphor panel are selected from the group consisting of CsBaBr₃, CsSrBr₃, CsCaBr₃, CsPbCl₃, CsSrCl₃, CsSmCl₃, CsHgCl₃, and CsₓEu_{y}Br_{x+αy} wherein 2 ≤ α < 3. It has moreover been established that an enhanced sensitivity of the photostimulated luminescence in a storage phosphor panel is found if it is co-doped with co-dopants. Furtheron LiM²F₃ as well as NaM²Cl₃ compounds are very suitable for use, wherein M² has been defined hereinbefore.

In a preferred embodiment in the panel according to the present invention, acting as a particularly strong ferroelectric, the precipitates or inclusions in said needle-shaped stimulable phosphor are BaTiO₃ or substituted material according to general formula (2)

Ba₁₋ₓ M¹ₓ Ti_{1-y} M²_{y}O_{δ} (2)

wherein M¹ and M² have the same significance as defined above;
and wherein 0 ≤ x < 1, 0 ≤ y < 1 and δ = (3-x/2-y).

It is clear that also other state of the art ferroelectric compounds may of course be added to or precipitated in a stimulable phosphor in order to provide a phosphor panel according to the present invention.

In the phosphor panel according to the present invention, if BaTiO₃ or substituted material like Ba₁₋ₓM¹ₓ Ti_{1-y} M²_{y}O_{δ} or other ferroelectric compounds are added to the Eu-doped matrix compound of a BaFBr- or CsBr-type stimulable phosphor, a coverage by an anti-diffusion layer is preferred in order to avoid or hinder undesired ions as Ti-ions to diffuse into the storage phosphor.

Furtheron in a stimulable phosphor an average distance between said inclusions, in form of particles or precipitates not only depends on the compound type as e.g. CsₓEu_{y}Br_{x+αy} wherein 2 ≤ α < 3 and the amount of inclusions in form of particles or precipitates present, but also depends on the particle size of the precipitate or particle inclusion.

In Table 1 hereinafter an example of such average distances has been given for a stimulable needle-shaped CsBr:Eu phosphor having CsEuBr₃ precipitates (representing 50 % of the total europium dopant amount) in needles with an average diameter of 10 µm and an average needle length of 500 µm, wherein for activator amounts in the range from 50 p.p.m. up to 2000 p.p.m., average distances (expressed in µm) between precipitates or inclusions of differing particle sizes (in the range from 10 nm up to 500 nm) have been represented, taking into account that the mass density of CsBr is 4.44 g/cm³ and that the density of the precipitate is 5.00 g/cm³.

**Table 1**

| Europium dopant amt. | 50 p.p.m. | 100 p.p.m. | 200 p.p.m. | 500 p.p.m. | 1000 p.p.m. | 2000 p.p.m. |
|---|---|---|---|---|---|---|
| 50 nm* | 1.3 | 1.0 | 0.8 | 0.6 | 0.5 | 0.4 |
| 100 nm* | 2.6 | 2.1 | 1.7 | 1.2 | 1.0 | 0.8 |
| 200 nm* | 5.3 | 4.2 | 3.3 | 2.4 | 1.9 | 1.5 |
| 300 nm* | 7.9 | 6.3 | 5.0 | 3.7 | 2.9 | 2.3 |
| 500 nm* | 13.2 | 10.5 | 8.3 | 6.1 | 4.9 | 3.9 |

| | | | | | | |
|---|---|---|---|---|---|---|
| * particle sizes (in nm) of precipitates or inclusions | | | | | | |

Average interspaces between inclusions or precipitates are clearly decreasing when dopant amounts are increasing, whereas larger particle sizes provide an increased average interspace, due to presence of inclusions or precipitates in lower amounts thereof.

According to the present invention said stimulable phosphor panel has a needle-shaped phosphor composed of a matrix compound selected from the group consisting of an alkali metal halide or combination of halides, an alkaline earth metal halide or combination of halides, an earth metal halide or combination of halides and a combination of at least two of said alkali metal, alkaline earth metal and earth metal halides or a combination of halides thereof.

In a preferred embodiment according to the present invention the stimulable phosphor panel has in a needle-shaped phosphor, as a dopant or activator compound or element, at least one lanthanide ion or at least one lanthanide compound.

The stimulable phosphor panel according to the present invention, in a most preferred embodiment, has a needle-shaped phosphor represented by the general formula (3)

M^{I}X.aM^{II}X'₂.bM^{III}X"₃:zA (3)

in which
M^{I} is at least one alkali metal element selected from the group consisting of Li, Na, K, Rb and Cs;
M^{II} is at least one alkaline earth metal element or divalent metal element selected from the group consisting of Be, Mg, Ca, Sr, Ba, Ni, Cu, Zn and Cd;
M^{III} is at least one rare earth element or trivalent metal element selected from the group consisting of Sc, Y, La, Ce, Pr, Nd, Pm, Sm, Eu, Gd, Tb, Dy, Ho, Er, Tm, Yb, Lu, Al, Ga and In; each of each of X, X' and X" independently is at least one halogen selected from the group consisting of F, Cl, Br and I; A is at least one rare earth element or metal element selected from the group consisting of Y, Ce, Pr, Nd; Sm, Eu, Gd, Tb, Dy, Ho, Er, Tm, Yb, Lu, Mg, Cu, and Bi; and a, b and z are numbers satisfying the conditions of 0 ≤ a < 0.5, 0 ≤ b < 0.5 and 0 < z ≤ 1.0, respectively.

Said phosphor panel may further additionally contain at least one compound comprising Ta, W, Ti or Mo.

A stimulable phosphor panel according to the present invention, in a most preferred embodiment thereof, has as a needle-shaped phosphor a europium activated cesium bromide phosphor.

### Examples

While the present invention will hereinafter be described in connection with preferred embodiments thereof, it will be understood that it is not intended to limit the invention to those embodiments.

An experimental set up in order to detect ferro-electricity is described hereinafter.

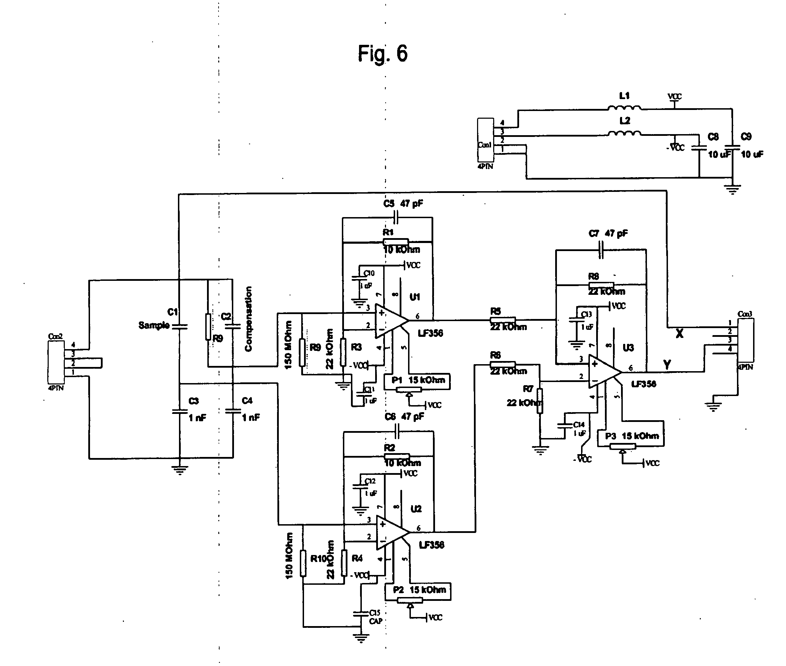

The simplest method of measuring a ferroelectric hysteresis loop makes use of the Sawyer-Tower-circuit, once used for the demonstration of ferroelectricity of Rochelle salt (C. B. Sawyer and C. H. Tower, Phys. Rev.,Vol.35, pages 269-273, 1930). In case of ferroelectric precipitates or inclusions within a non-ferroelectric matrix, especially at the low volume fraction of said precipitates or inclusions, is more difficult and, as a consequence, requires a more sophisticated measuring method (Fig. 6).

The compensation-method (H. Diamant, K. Drenck, and R. Pepinsky. Rev. Sci. Instr., Vol. 28(1), p. 30-33, 1957) therefore contains a Wheatstone bridge which offers the opportunity of subtracting the part of the signal which behaves linear in the electrical field (in the case of CsBr:Eu²⁺ imaging plates over 99 % - by volume - of the investigated sample).

The bridge was created by placing a second compensation-capacitor unit in parallel to the measurement unit of the Sawyer-Tower circuit. This compensation-capacitor unit should have equal values of capacitance and resistivity (CsBr is not ideally isolating). By subtracting the signal of both units, only the nonlinear part of the sample-signal remains.

All components should be chosen carefully: the electronic circuit preferably consists of a digital function generator from Hewlett Packard which generates a sinusoidal voltage having a frequency varying within the range of 20 Hz to 20 kHz.

Because the amplitude of the voltage was limited to 15 Volt, the voltage was amplified by audio transformators up to values of about 150 V.

The Wheatstone bridge, in practical tests, contained four capacitors: one of them was the sample containing a CsBr:Eu imaging plate, placed between two copper plates of the same size, and another one was the compensation capacitor combined with a trimmable resistor.

In order to see the difference between the two sides of the bridge the voltages of both sides were subtracted, wherein the subtraction was performed by making use of hardware. In order to avoid influencing of the high impedant signal of the bride by the low impedant subtracting circuit, the signal of the sample and that of the compensation unit were amplified in order to obtain a low output impedance. The input impedance of this amplifier was high (> 10⁺⁹ Ω), the output impedance was low, the current amplification is high and the voltage amplification was 1. Then both signals were subtracted by an operational amplifier. In this step the amplification factor was 2.

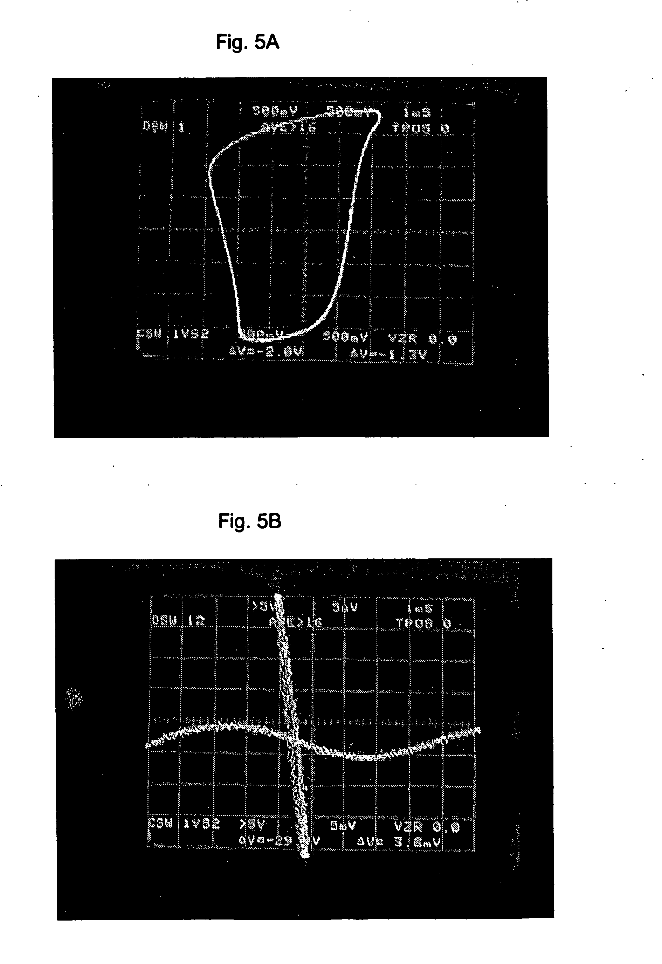

In order to adjust the compensation, the output of the two high impedant amplifiers were displayed on an oscilloscope (e.g Fig. 5). The compensating capacitor and resistor were trimmed in such a way that the voltages of the two sides of the bridge were as equalised to the most suitable extent. In order to avoid any disturbance by electrical and magnetical fields, the electronics were placed in a box containing a grounded shield.

Experimental evidence for the existence of precipitates in CsBr:Eu imaging plates has been shown in Fig. 1, explained in the detailed description hereinbefore. Based on those photographs data of dimensions of precipitates as seen by TEM measurements were summarized. So from Table 2 hereinafter it becomes clear that annealing by temperature treatment makes precipitates or inclusions to grow. This may be interpreted as an Ostwald ripening, occurring as a consequence of a thermodynamic surface energy reduction phenomenon. As only a small number of precipitates were found in differing TEM-samples, it is clear that the statistical overview of precipitate dimensions as given in Table 2, should be looked at with some care, and not be interpreted as being "absolute".

Distribution of precipitates was checked by a SEM (scanning electron microscope)-study. Samples were polished chemo-mechanically and the surface was carbon-coated or was cut by ultramicrotomy and then carbon coated. The appearance of precipitates was found to be not exactly homogeneous, as there were always found "accumulation regions" (see Fig. 2 wherein in the left photograph, holes - presumably disruptions of precipitates in an ultramicrotomy cut - are shown; whereas in the right photograph precipitates - white in SEM contrast - are shown on a polished sample).

**Table 2**

| | Not annealed | Annealed 180°C | Annealed 400°C |
|---|---|---|---|
| Average particle size | 175 nm | 210 nm | 280 nm |
| Deviation | 120 nm | 100 nm | 140 nm |
| Smallest particle | 33 nm | 77 nm | 155 nm |
| Biggest particle | 492 nm | 498 nm | 606 nm |
| Number of precipitates in | | | |
| - TEM images | 9 | 14 | 8 |
| - Polishing & ion-milled image | 2 | 14 | - |

Only a very tough temperature treatment, not suitable for application upon X-ray storage phosphors or storage phosphors plates coated therewith, provides a homogeneous precipitate distribution with average distances between precipitates of about 2 µm (Fig. 3).

Experimental evidence for the crystallinity of precipitates has been shown in Fig. 4. Crystallinity was checked by the "dark-field" technique: a selection of an appropriate reflex of an inclusion in the diffraction mode makes inclusions to appear dark in a "bright field" image (Fig. 4B), whereas in the "dark-field" image (Fig. 4A), those inclusions become visible as white spots or sites.

A correlation was found between incorporated precipitates and europium dopant. SEM-photographs of a nominally pure CsBr phosphor imaging plate, "without" europium dopant (its europium content was still 100 p.p.b.; i.e. a factor of at least 1000 lower than the europium content in a regular CsBr:Eu phosphor plate !) show almost no precipitates

The ferroelectric character of CsBr:Eu phosphor plates or panels was demonstrated by studying its behaviour in an alternating electrical field. When carefully correcting the phase shift of the sample by a parallel potentiometer and the amplitude by a trimmable capacitor, occurrence of a hysteresis loop was observed (as in Fig. 5A), even at room temperature (see difference with comparative "loop" on bare PET polyester support, shown in Fig. 5B).

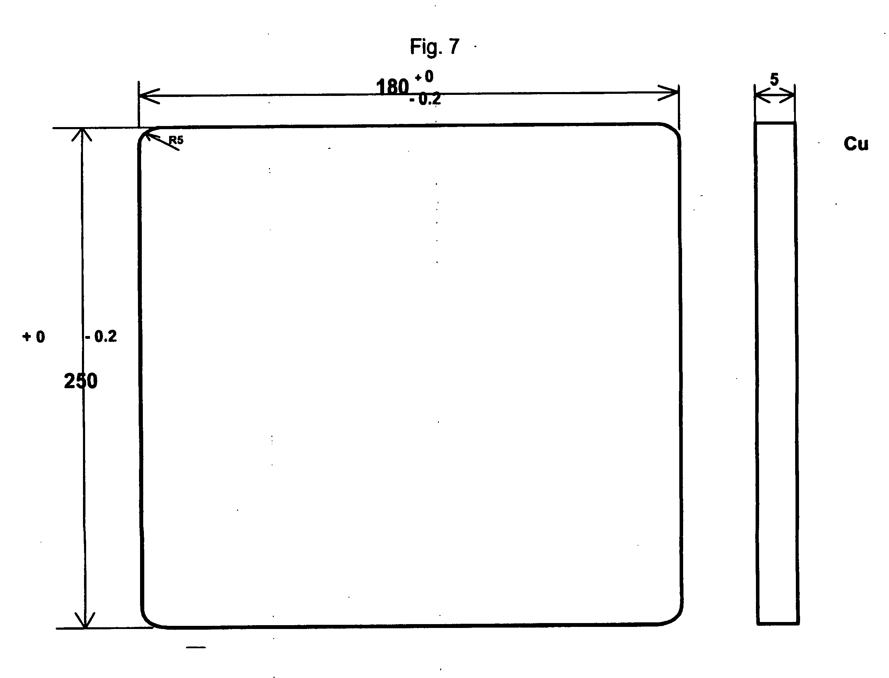

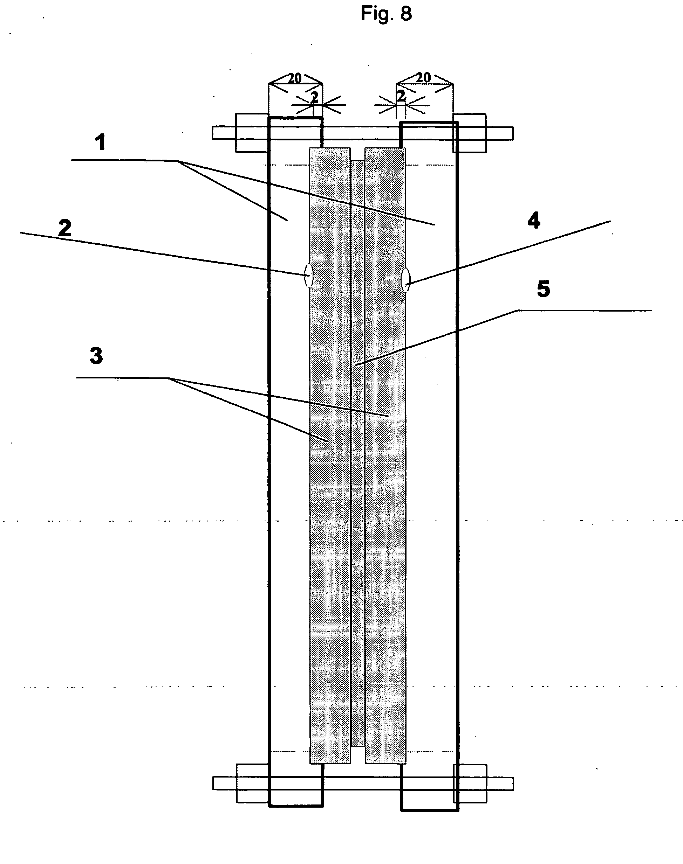

Experimental evidence for room-temperature ferroelectricity of CsBr:Eu (substantially having divalent europium ions) was further obtained while placing an imaging plate or panel as a capacitor between two copper plates in a furnace (dimensions of sample and one copper plate shown in Fig. 7; the arrangement of imaging plate (test sample 5), between two copper plates (3), copper thread connections (2 and 4), arranged in a plastic holder (1) at both sides in order to provoke good contact of sample and copper plates by pressure being shown in Fig. 8).

Monitoring the capacitance during heating of the furniture in an inert atmosphere was illustrative for a perfect Curie-behavior at a first temperature cycle at 210°C. Second and third cycles, run above said point of 210°C showed degradation of ferroelectricity: the more one heats up the plate above the Curie-point, the stronger the degradation of the ferro-electric character is.

From experimental investigations of spectroscopic points by determining the decay of divalent europium emission it becomes clear that spectra of ultra-violet excitation and stimulated luminescence, monitored at the same set of filters using a CCD camera reveals that the spectra are shifted: photoluminescent spectra and photostimulated spectra are thus differing and from studies of divalent europium systems including Cs-Eu-Br compounds it is clear that mainly precipitates are responsible for photoluminescent behaviour, while the photostimulated luminescence is mainly due to divalent europium dopant, present in the CsBr-matrix. As the concentration of those isolated divalent europium ions is most expressed in the direct vicinity of the precipitates, ferroelectric properties in the matrix become important as the dipole of the ferroelectric region induces an electrical field into the CsBr matrix (see hysteresis loop Fig.7a). It is assumed that excitons, built up during X-ray irradiation, are easily split up in such an electric field and that the lowered tendency to recombination in the presence of a ferroelectric phase leads to an improved sensitivity of the photostimulable phosphor.

As it has been established experimentally that, while heating the panels having CsBr:Eu layers in order to study ferro-electrical behaviour as a function of time, water vapour escapes from the binderless needle-shaped layers in a first step in a temperature range between 70°C and 80°C, and in a second temperature range around about 200°C. This experimental observation illustrates presence of -O-H--derivatives in the perovskite-lattice structure, providing evidence of ferro-electric behaviour in needle-shaped layers of CsBr:Eu doped with low amounts of Eu-dopant, i.e. in the range of less than 0.01 mole% versus the CsBr matrix.

It was further found that presence of CsSrBr3 and CsSrI₃ in a BaFBr:Eu storage phosphor provides enhanced sensitivity of the photostimulated luminescence: temperature dependent measurement of the capacitance, just as for CsBr:Eu, again showed Curie-like behavior in the crystallographic transition region from tetragonal to cubic. Same conclusions were drawn in the presence of CsBaBr₃ and CsCaBr₃ in BaFBr:Eu.

Having described in detail preferred embodiments of the current invention, it will now be apparent to those skilled in the art that umerous modifications can be made therein without departing from the scope of the invention as defined in the appending claims.

## Claims

1. A storage phosphor sheet, plate or panel, comprising a needle-shaped storage or photostimulable phosphor, said needle-shaped phosphor comprising a host or matrix compound and a dopant or activator compound or element in an amount of less than 0.01 mole% versus said host or matrix compound, wherein said needle-shaped phosphor further comprises, as inclusions or precipitates, particles having a size in the range from 10⁻³ µm up to 10 µm, **characterised in that** said particles are present as ferroelectric particles.

2. Panel according to claim 1, wherein said particles have a size in the range from 10 nm to 1 µm.

3. Panel according to claim 1 or 2, wherein at least said dopant or activator compounds or elements are present as inclusions or precipitates in said matrix compound.

4. Panel according to any one of the claims 1 to 3, wherein in said storage phosphor a total amount of activator compound ranges from 1 p.p.m. to 200 p.p.m..

5. Panel according to any one of the claims 1 to 4, wherein an average interspace between inclusions or precipitates is in the range from 50 nm to 15 µm.

6. Panel according to any one of the claims 1 to 5, wherein said inclusions or precipitates are compounds or a mixture of compounds according to general formula (1)
M¹M²X₃ (1),
wherein M¹ represents one of Li, Na, K, Rb and Cs as an alkali metal;
wherein M² represents one of Mg, Ca, Sr and Ba as an earth alkaline metal; Eu or Sm as a lanthanide; Hg or Pb as a transition metal;
wherein X stands for one of F, Cl, Br or I as a halide.

7. Panel according to any one of the claims 1 to 5, wherein said inclusions or precipitates are selected from the group consisting of CsBaBr₃, CsSrBr₃, CsCaBr₃, CsPbCl₃, CsSrCl₃, CsSmCl₃, CsHgCl₃, and CsₓEu_{y}Br_{x+αy} wherein 2 ≤ α < 3.

8. Panel according to any one of the claims 1 to 5, wherein said inclusions or precipitates are compounds or a mixture of compounds according to the general formula (2)
Ba₁₋ₓM¹ₓTi_{1-y}M²_{y}O_{δ} (2)
wherein M¹ represents one of Li, Na, K, Rb and Cs as an alkali metal;
wherein M² represents one of Mg, Ca, Sr and Ba as an earth alkaline metal; Eu or Sm as a lanthanide; Hg or Pb as a transition metal;
wherein X stands for one of F, Cl, Br or I as a halide and wherein 0 ≤ x ≤ 1, 0 ≤ y < 1 and δ = (3-x/2-y).

9. Panel according to any one of the claims 1 to 8, wherein said inclusions or precipitates are covered by an anti-diffusion layer.

10. Panel according to any one of the claims 1 to 8, wherein said storage phosphor is composed of a matrix compound selected from the group consisting of an alkali metal halide or combination of halides, an alkaline earth metal halide or combination of halides, an earth metal halide or combination of halides and a combination of at least two of said alkali metal, alkaline earth metal and earth metal halides or a combination of halides thereof.

11. Panel according to any one of the claims 1 to 10, wherein said storage phosphor has, as a dopant or activator compound or element, at least one lanthanide ion or at least one lanthanide compound.

12. Panel according to any one of the claims 1 to 10, wherein said storage phosphor is represented by general formula (3)
M^{I}X.aM^{II}X'₂.bM^{III}X"₃:zA (3)
in which M^{I} is at least one alkali metal element selected from the group consisting of Li, Na, K, Rb and Cs; M^{II} is at least one alkaline earth metal element or divalent metal element selected from the group consisting of Be, Mg, Ca, Sr, Ba, Ni, Cu, Zn and Cd;
M^{III} is at least one rare earth element or trivalent metal element selected from the group consisting of Sc, Y, La, Ce, Pr, Nd, Pm, Sm, Eu, Gd, Tb, Dy, Ho, Er, Tm, Yb, Lu, Al, Ga and In; each of each of X, X' and X" independently is at least one halogen selected from the group consisting of F, Cl, Br and I; A is at least one rare earth element or metal element selected from the group consisting of Y, Ce, Pr, Nd, Sm, Eu, Gd, Tb, Dy, Ho, Er, Tm, Yb, Lu, Mg, Cu, and Bi; and
a, b and z are numbers satisfying the conditions of 0 ≤ a < 0.5, 0 ≤ b < 0.5 and 0 < z ≤ 1.0, respectively.

13. Panel according to any one of the claims 1 to 12, wherein said stimulable phosphor is a europium activated cesium bromide phosphor.

## Patentansprüche

1. Eine Speicherfolie oder Speicherplatte, die einen nadelförmigen Speicherleuchtstoff oder ausleuchtbaren Leuchtstoff enthält, wobei der nadelförmige Leuchtstoff eine Wirtsverbindung oder Matrixverbindung und ein Dotiermittel oder eine Aktivatorverbindung oder ein Aktivatorelement in einer Menge unter 0,01 mol-%, bezogen auf die Wirtsverbindung oder Matrixverbindung, enthält, wobei der nadelförmige Leuchtstoff ferner als Einschlüsse oder Präzipitate Teilchen mit einer Größe zwischen 10⁻³ µm und 10 µm enthält, **dadurch gekennzeichnet, dass** die Teilchen als ferroelektrische Teilchen vorliegen.

2. Folie nach Anspruch 1, **dadurch gekennzeichnet, dass** die Teilchen eine Teilchengröße zwischen 10 nm und 1 µm aufweisen.

3. Folie nach Anspruch 1 oder 2, **dadurch gekennzeichnet, dass** zumindest das Dotiermittel oder die Aktivatorverbindungen oder Aktivatorelemente als Einschlüsse oder Präzipitate in der Matrixverbindung enthalten sind.

4. Folie nach einem der Ansprüche 1 bis 3, **dadurch gekennzeichnet, dass** der Speicherleuchtstoff die Aktivatorverbindung in einer Gesamtmenge zwischen 1 ppm und 200 ppm enthält.

5. Folie nach einem der Ansprüche 1 bis 4, **dadurch gekennzeichnet, dass** der mittlere Zwischenabstand zwischen den Einschlüssen oder Präzipitaten zwischen 50 nm und 15 µm liegt.

6. Folie nach einem der Ansprüche 1 bis 5, **dadurch gekennzeichnet, dass** die Einschlüsse oder Präzipitate Verbindungen oder ein Gemisch aus Verbindungen der allgemeinen Formel (1) sind :
M¹M² X₃ (1)
in der :
M¹ Li, Na, K, Rb oder Cs als Alkalimetall bedeutet,
M² Mg, Ca, Sr oder Ba als Erdalkalimetall, Eu oder Sm als Lanthanid oder Hg oder Pb als Übergangsmetall bedeutet und
X F, Cl, Br oder I als Halogenid bedeutet.

7. Folie nach einem der Ansprüche 1 bis 5, **dadurch gekennzeichnet, dass** die Einschlüsse oder Präzipitate aus der Gruppe bestehend aus CsBaBr₃, CsSrBr₃, CsCaBr₃, CsPbCl₃, CsSrCl₃, CsSmCl₃, CsHgCl₃ und CsₓEu_{y}Br_{x+αy}, wobei 2 ≤ α < 3, gewählt werden.

8. Folie nach einem der Ansprüche 1 bis 5, **dadurch gekennzeichnet, dass** die Einschlüsse oder Präzipitate Verbindungen oder ein Gemisch aus Verbindungen der allgemeinen Formel (2) sind :
Ba₁₋ₓ M¹ₓ Ti_{1-y} M²_{y}O_{δ} (2)
in der :
M¹ Li, Na, K, Rb oder Cs als Alkalimetall bedeutet,
M² Mg, Ca, Sr oder Ba als Erdalkalimetall, Eu oder Sm als Lanthanid oder Hg oder Pb als Übergangsmetall bedeutet,
X F, C1, Br oder I als Halogenid bedeutet,
0 ≤ x < 1,
0 ≤ y < 1 und
δ = (3-x/2-y).

9. Folie nach einem der Ansprüche 1 bis 8, **dadurch gekennzeichnet, dass** die Einschlüsse oder Präzipitate mit einer Diffusionsschutzschicht beschichtet sind.

10. Folie nach einem der Ansprüche 1 bis 8, **dadurch gekennzeichnet, dass** der Speicherleuchtstoff aus einer Matrixverbindung zusammengesetzt ist, wobei als Matrixverbindung ein Alkalimetallhalogenid oder eine Kombination von solchen Halogeniden, ein Erdalkalimetallhalogenid oder eine Kombination von solchen Halogeniden, ein Erdmetallhalogenid oder eine Kombination von solchen Halogeniden oder eine Kombination von zumindest zwei Halogeniden aus der Reihe der Alkalimetall-, Erdalkalimetall- und Erdmetallhalogenide oder einer Kombination von solchen Halogeniden verwendet wird.

11. Folie nach einem der Ansprüche 1 bis 10, **dadurch gekennzeichnet, dass** der Speicherleuchtstoff als Dotiermittel oder Aktivatorverbindung oder Aktivatorelement zumindest ein Lanthanidion oder zumindest eine Lanthanidverbindung enthält.

12. Folie nach einem der Ansprüche 1 bis 10, **dadurch gekennzeichnet, dass** der Speicherleuchtstoff der allgemeinen Formel (3) entspricht :
M^{I}X.aM^{II}X'₂.bM^{III}X"₃:zA (3)
in der :
M^{I} zumindest ein Alkalimetallelement aus der Gruppe bestehend aus Li, Na, K, Rb und Cs bedeutet,
M^{II} zumindest ein Erdalkalimetallelement oder zweiwertiges Metallelement aus der Gruppe bestehend aus Be, Mg, Ca, Sr, Ba, Ni, Cu, Zn und Cd bedeutet,
M^{III} zumindest ein Seltenerdelement oder dreiwertiges Metallelement aus der Gruppe bestehend aus Sc, Y, La, Ce, Pr, Nd, Pm, Sm, Eu, Gd, Tb, Dy, Ho, Er, Tm, Yb, Lu, Al, Ga und In bedeutet, und X, X' und X" unabhängig voneinander jeweils zumindest ein Halogen aus der Gruppe bestehend aus F, Cl, Br und
I bedeuten, A zumindest ein Seltenerdelement oder Metallelement aus der Gruppe bestehend aus Y, Ce, Pr, Nd, Sm, Eu, Nd, Tb, Dy, Ho, Er, Tm, Yb, Lu, Mg, Cu und Bi bedeutet und a, b und z Zahlen sind, die den Formeln 0 ≤ a < 0,5, 0 ≤ b < 0,5 bzw. 0 < z ≤ 1,0 entsprechen.

13. Folie nach einem der Ansprüche 1 bis 12, **dadurch gekennzeichnet, dass** der ausleuchtbare Leuchtstoff ein mit Europium aktivierter Cäsiumbromid-Leuchtstoff ist.

## Revendications

1. Une feuille, une plaque ou un panneau radioluminescent(e) à mémoire comprenant un luminophore aciculaire d'emmagasinage ou photostimulable, ledit luminophore aciculaire comprenant un composé hôte ou un composé matriciel ainsi qu'un composé ou élément dopant ou activant en une quantité inférieure à 0,01 mole % par rapport audit composé hôte ou composé matriciel, ledit luminophore aciculaire comprenant en outre, sous forme d'inclusions ou de précipités, des particules d'une grandeur dans la plage de 10⁻³ µm à 10 µm, **caractérisé**(e) en ce que lesdites particules sont contenues sous forme de particules ferroélectriques.

2. Panneau selon la revendication 1, **caractérisé en ce que** lesdites particules ont une grandeur dans la plage de 10 nm à 1 µm.

3. Panneau selon la revendication 1 ou 2, **caractérisé en ce qu'**au moins lesdits composés ou éléments activants ou dopants sont contenus dans ledit composé matriciel sous forme d'inclusions ou de précipités.

4. Panneau selon l'une quelconque des revendications 1 à 3, **caractérisé en ce qu'**une quantité totale de composé activant dans ledit luminophore d'emmagasinage est comprise entre 1 ppm et 200 ppm.

5. Panneau selon l'une quelconque des revendications 1 à 4, **caractérisé en ce qu'**un espacement moyen entre les inclusions ou précipités est compris entre 50 nm et 15 µm.

6. Panneau selon l'une quelconque des revendications 1 à 5, **caractérisé en ce que** lesdites inclusions ou lesdits précipités sont des composés ou un mélange de composés répondant à la formule générale (1)
M¹M²X₃ (1),
dans laquelle M¹ représente un des éléments Li, Na, K, Rb et Cs en tant que métal alcalin; M² représente un des éléments Mg, Ca, Sr et Ba en tant que métal alcalino-terreux; Eu ou Sm en tant que lanthanide; Hg ou Pb en tant que métal de transition; et dans laquelle X représente un des éléments F, Cl, Br ou I en tant qu'halogénure.

7. Panneau selon l'une quelconque des revendications 1 à 5, **caractérisé en ce que** lesdites inclusions ou lesdits précipités sont choisi(e)s parmi CsBaBr₃, CsSrBr₃, CsCaBr₃, CsPbCl₃, CsSrCl₃, CsSmCl₃ CsHgCl₃ et CsₓEu_{y}Br_{x+αy} dans lequel 2 ≤ α < 3.

8. Panneau selon l'une quelconque des revendications 1 à 5, **caractérisé en ce que** lesdites inclusions ou lesdits précipités sont des composés ou un mélange de composés répondant à la formule générale (2)
Ba₁₋ₓM¹ₓTi_{1-y}M²_{y}O_{δ} (2)
dans laquelle M¹ représente un des éléments Li, Na, K, Rb et Cs en tant que métal alcalin; M² représente un des éléments Mg, Ca, Sr et Ba en tant que métal alcalino-terreux; Eu ou Sm en tant que lanthanide; Hg ou Pb en tant que métal de transition; X représente un des éléments F, Cl, Br ou I en tant qu'halogénure et dans laquelle 0 ≤ x ≤ 1, 0 ≤ y < 1 et δ = (3-x/2-y) .

9. Panneau selon l'une quelconque des revendications 1 à 8, **caractérisé en ce que** lesdites inclusions ou lesdits précipités sont recouvert(e)s d'une couche antimigratoire.

10. Panneau selon l'une quelconque des revendications 1 à 8, **caractérisé en ce que** ledit luminophore d'emmagasinage est constitué par un composé matriciel choisi parmi un halogénure ou une combinaison d'halogénures des métaux alcalins, un halogénure ou une combinaison d'halogénures des métaux alcalino-terreux, un halogénure ou une combinaison d'halogénures des métaux terreux et une combinaison d'au moins deux de ces halogénures des métaux alcalins, des métaux alcalino-terreux et des métaux terreux ou une combinaison d'halogénures de ceux-ci.

11. Panneau selon l'une quelconque des revendications 1 à 10, **caractérisé en ce que** ledit luminophore d'emmagasinage possède au moins un ion lanthanide ou au moins un composé lanthanide faisant office de composé ou élément dopant ou activant.

12. Panneau selon l'une quelconque des revendications 1 à 10, **caractérisé en ce que** ledit luminophore d'emmagasinage répond à la formule générale (3)
M^{I}X.aM^{II}X'₂.bM^{III}X"₃:zA (3)
dans laquelle M^{I} est au moins un élément des métaux alcalins choisi parmi Li, Na, K, Rb et Cs; M^{II} est au moins un élément des métaux alcalino-terreux ou un élément des métaux bivalents choisi parmi Be, Mg, Ca, Sr, Ba, Ni, Cu, Zn et Cd; M^{III} est au moins un élément des terres rares ou un élément des métaux trivalents choisi parmi Sc, Y, La, Ce, Pr, Nd, Pm, Sm, Eu, Gd, Tb, Dy, Ho, Er, Tm, Yb, Lu, Al, Ga et In; X, X' et X" indépendamment l'un de l'autre représentent chacun au moins un atome d'halogène choisi parmi F, C1, Br et I; A est au moins un élément des terres rares ou élément des métaux choisi parmi Y, Ce, Pr, Nd, Sm, Eu, Gd, Tb, Dy, Ho, Er, Tm, Yb, Lu, Mg, Cu et Bi; et a, b et z sont des nombres tels que respectivement 0 ≤ a < 0,5, 0 ≤ b < 0,5 et 0 < z ≤ 1,0.

13. Panneau selon l'une quelconque des revendications 1 à 12, **caractérisé en ce que** ledit luminophore stimulable est un luminophore de bromure de césium activé à l'europium.
